# EUROPEAN PATENT APPLICATION

(11) **EP 3 859 921 A1**
(43) Date of publication of application: **04.08.2021**
(21) Application number: 20154015.0
(22) Date of filing: 28.01.2020
(51) Int. Cl.: H02G 3/22, H02G 15/013

(54) **CABLE SEAL AND METHOD OF MANUFACTURE**

(71) Applicant: Aptiv Technologies Limited, St. Michael (BB)
(72) Inventor: Bak, Szymon, 31-834 Krakow (PL); Kliszka, Artur, 30-399 Krakow (PL)
(74) Representative: Manitz Finsterwald Patent- und Rechtsanwaltspartnerschaft mbB

(57) **Abstract**

A cable seal comprises a sleeve heat shrunk over an outer jacket of a cable wherein an adhesive is provided between the sleeve and the outer jacket and a sealant covering the sleeve and an adjacent region of the outer jacket is over-molded.

## Description

### FIELD

The present disclosure relates to a cable seal and to a method of manufacturing a cable seal.

### BACKGROUND

Highly resistant sealing of single cables or cable bundles is a standard sealing method for harnesses, especially for firewall grommets. Polyurethane (PUR) foam can be used as a sealant to seal cables or e.g. ring terminal sealing cups. A sealing function is provided by adhesion to a protective outer jacket of a cable. However, if an outer jacket of a non-PVC material, e.g. of a silicone material, is used, a tight and sealed connection of the whole assembly is difficult to achieve. More specifically, if a polyurethane material, e.g. a two-component PUR material is used as a sealant, it is difficult to be applied due to the non-adhesive behaviour of the non-PVC cable jacket.

There is a need to provide an improved cable seal which can be manufactured at low cost and which provides a good sealing against water.

### SUMMARY

The present disclosure provides a cable seal and a method of manufacturing a cable seal according to the independent claims. Embodiments are given in the subclaims, the description and the drawings.

In one aspect, the present disclosure is directed to a method of manufacturing a cable seal, the method comprising: Providing a cable having a protective outer jacket of a non-PVC material, providing a heat shrinkable sleeve, positioning the heat shrinkable sleeve over the protective outer jacket with an adhesive between the heat shrinkable sleeve and the outer jacket, heat shrinking the sleeve, and overmolding the sleeve and an adjacent region of the outer jacket with a sealant.

According to this method a highly resistant sealant, e.g. polyurethane (PUR) foam, of single wires or wire bundles can be applied on all types of non-PVC cable jackets such as XLPE, XLPO, SIR and other materials. In order to ensure compatibility and adhesion, an intermediate interface in the form of a heat shrinkable sleeve and an adhesive is applied. The heat shrinkable sleeve may be provided with a layer of adhesive. After heat shrinking a PUR foam can be overmolded according to a standard PUR foaming proces.The intermediate structure consisting of the shrunk sleeve and the adhesive allows for an improved interconnection between the overmolded sealant and the cable.

According to an embodiment, the method comprises the use of a polyurethane material as the sealant. This allows the use of low pressure injection molding technology wherein the overmold of sealant may be molded to form a watertight and sealed outer enclosure of the cable, e.g. a grommet.

According to a further embodiment a sleeve may be used which is made of a PVC material such that upon heat shrinking the sleeve tightly fits on and connects with the cable.

According to an embodiment, an elastic sealing ring may be positioned between the adhesive and the outer jacket. Such sealing ring may be made of a silicone material and improves the sealing and the interlocking between the cable jacket the overmolded sealant. Alternative materials for the sealing ring are rubber, PTFE or the like.

According to a further embodiment, an adhesive can be applied to an inner surface of the sleeve. For example, the inner wall of the sleeve can be coated or laminated with an adhesive or a separate adhesive layer can be introduced between the sleeve and the outer jacket before heat shrinking.

In another aspect, the present disclosure is directed to a cable seal, in particular manufactured by a method described herein. The cable seal may comprise: A sleeve heat shrunk over a protective outer jacket of a cable, said outer jacket made of a non-PVC material, an adhesive between the sleeve and the outer jacket, and an overmold of sealant covering the sleeve and an adjacent region of the outer jacket.

According to an embodiment, the sealant is made of a polyurethane material. Such material is well suited for applying a sealant by low pressure injection molding with a 100% tight insulation against water, a resistance against oils, acids and chemicals and a resistance to temperature and vibrations. By overmolding a polyurethane material, it is further possible to implement markings or logos and to produce the overmolding in any desired color. Furthermore, a PUR overmold material may be solid or foam.

The present disclosure provides the possibility to apply wires with non-PVC jackets such as XLPE, XLPO, SIR and others with all PUR applications. The XLPE, XLPO cables are less expensive than PVC cables and have a higher flexibility. The final seal is 100% waterproof, ensures mechanical resistance (pull-out force) and reduces the material cost. The seal is applicable to both, cable bundles and single cables (e.g. for eX HV products).

### DRAWINGS

Exemplary embodiments and functions of the present disclosure are described herein in conjunction with the following drawings, showing schematically in
- Fig. 1: a cross-section of a first embodiment of cable seal; and
- Fig. 2: a cross-section of a second embodiment of cable seal.

### DETAILED DESCRIPTION

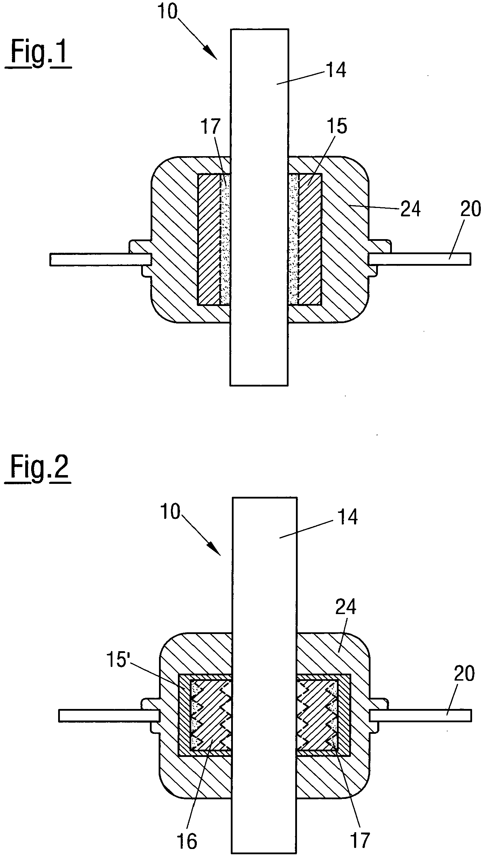

Fig. 1 depicts a seal of a cable 10, the cable comprising one or more electrical or optical conductors surrounded by a protective outer jacket 14 made of a non-PVC material, e.g. a polyolefin, polyethylene or silicone material.

In the disclosed embodiment the cable 10 extends through an opening in a wall 20. Before the cable 14 is inserted into the opening of the wall 20, a sleeve 15 which is made of heat shrinkable material (e.g. PVC material) is positioned over the cable with an adhesive 17 being provided between the sleeve 15 and the outer jacket 14. The adhesive 17 may be provided as an adhesive layer on the inner circumference of the sleeve 15. Alternatively, the adhesive 17 may be provided as a separate sleeve or may be applied directly onto the outer jacket 14. After a placement of the sleeve 15 over the outer jacket 14 with the adhesive 17 between the sleeve 15 and the jacket 14 the sleeve 15 is heat shrunk onto the cable 10 wherein the adhesive 17 serves to fix against an axial displacement of the sleeve 15.

Thereafter, the cable 10 is inserted into the opening of the wall 20 such that the sleeve 15 extends through the opening and the sleeve 15 is provided with an overmolding of sealant 24 (e.g. PUR sealant), said sealant forming a seal in the form of a grommet to seal and isolate against humidity and water.

Fig. 2 depicts a further embodiment of a cable seal with the same reference numerals used for the same elements.

The cable seal of Fig. 2 generally corresponds to the embodiment of Fig. 1 with similar components having the same reference numerals. An elastic sealing ring 16 is positioned between the adhesive 17 and the outer jacket 14 of the cable 10. As shown in the drawing, the elastic sealing ring 16 may be serrated e.g. by providing annular groves at the inner or outer circumference such as to provide improved sealing properties and an interlocking between the sealing ring 16 and the adhesive 17 on the one hand and the sealing ring 16 and the outer jacket 14 on the other hand.

In this embodiment a sleeve 15' is heat shrunk onto the outer jacket 14 such as to encapsulate the sealing ring 16 not only at its outer circumference but also on both opposite side surfaces. However, this is merely an optional feature and not mandatory.

In both embodiments the overmold of sealant 24 fully encapsulates the sleeve 15 and the adhesive 17.

## Claims

1. A method of manufacturing a cable seal, the method comprising:
- providing a cable (10) having a protective outer jacket (14) of a non-PVC material;
- providing a heat shrinkable sleeve (15, 15');
- positioning the heat shrinkable sleeve (15, 15') over the protective outer jacket (14) with an adhesive (17) between the heat shrinkable sleeve (15, 15') and the outer jacket (14);
- heat shrinking the sleeve (15, 15'); and
- overmolding the sleeve (15, 15') and an adjacent region of the outer jacket (14) with a sealant (24).

2. The method of claim 1,
wherein the sealant (24) is a polyurethane material, e.g. a polyurethane (PUR) foam material.

3. The method of claim 1 or 2,
wherein the sleeve (15, 15') is made of a PVC material.

4. The method of any of the preceding claims,
wherein an elastic sealing ring (16) is positioned between the adhesive (17) and the outer jacket (14).

5. The method of claim 4,
wherein the sealing ring (16) is made of a rubber, a PTFE, or a silicone material.

6. The method of any of the preceding claims,
wherein the adhesive (17) is applied to an inner surface of the sleeve (15, 15').

7. The method of any of the preceding claims,
wherein the overmolded sealant (24) is formed as a grommet.

8. A cable seal, in particular manufactured by a method in accordance with any of the preceding claims, said seal comprising:
a sleeve (15, 15') heat shrunk over a protective outer jacket (14) of a cable (10), said outer jacket (14) made of a non-PVC material;
an adhesive (17) between the sleeve (15, 15') and the outer jacket (14);
an overmold of sealant (24) covering the sleeve (15, 15') and an adjacent region of the outer jacket (14).

9. The cable seal of claim 8,
wherein the sealant (24) is made of a polyurethane material, e.g. a PUR foam material.

10. The cable seal of claim 8 or 9,
wherein the sleeve (15, 15') is made of a PVC material.

11. The cable seal of any of claims 8 to 10,
wherein an elastic sealing ring (16) is positioned between the adhesive (17) and the outer jacket (14).

12. The cable seal of claim 11,
wherein the sealing ring (16) is made of a rubber, a PTFE, or a silicone material.

13. The cable seal of claim 11 or 12,
wherein the sealing ring (16) is provided with grooves at its inner and/or outer circumference.

14. The cable seal of any of claims 11 to 13,
wherein the sleeve (15') encapsulates the sealing ring (16).

15. The cable seal of any of claims 8 to 14,
wherein the overmold of sealant (24) is formed as a grommet.
